# EUROPÄISCHE PATENTANMELDUNG

(11) **EP 1 746 328 A1**
(43) Veröffentlichungstag der Anmeldung: **24.01.2007**
(21) Anmeldenummer: 06007839.1
(22) Anmeldetag: 13.04.2006
(51) Int. Cl.: F16L 33/18, F16L 33/00

(54) **Verbindungsvorrichtung**

(30) Priorität: 18.07.2005 DE 102005033482
(71) Anmelder: IPA Produktions- & Vertriebsges.m.b.H., 1230 Wien (AT)
(72) Erfinder: Ogris, Bernhard, Dipl.-Ing., 2511 Pfaffstätten (AT)
(74) Vertreter: Schwabe - Sandmair - Marx

(57) **Zusammenfassung**

Die Erfindung betrifft eine Verbindungsvorrichtung für ein Rohr insbesondere teilweise aus Kunststoff, mit einem Stützhülsenabschnitt (10), einem Anschlagabschnitt (14, 12) sowie einer Presshülse, die die Stützhülse (10) umgibt und mit der Stützhülse zusammen einen Ringraum zur Aufnahme eines Endes des Rohres bereitzustellen vermag, wobei erfindungsgemäß ein Dichtelement (50) mit einem wenigstens polygonförmigen Querschnitt vorgesehen ist.

## Beschreibung

Die Erfindung betrifft eine Verbindungsvorrichtung für den Anschluss eines Kunststoff aufweisenden Rohres, wobei die Verbindungsvorrichtung einen Stützhülsenabschnitt aufweist, aus dem das Rohr aufschiebbar ist, und der bevorzugt eine umfängliche Struktur aufweist, wobei ein Anschlagabschnitt am Ende der Stützhülse vorgesehen ist, gegen den das aufgeschobene Rohr stirnseitig anschlägt und wobei ferner eine vorzugsweise zylindrische Presshülse vorgesehen werden kann, die die Stützhülse zu umgeben vermag, wenn sie angeordnet ist, und einen Ringraum zur Aufnahme des Rohres zwischen sich und der Stützhülse bereitstellt, gemäß dem Patentanspruch 1.

Im Stand der Technik sind unterschiedlichste Arten von Verbindungsvorrichtungen für Rohre bekannt. Häufig haben derartige Verbindungsvorrichtungen Dichtelemente, etwa in der Form von O-Ringen aus Gummi, Kunstgummi oder dgl., die in in der Regel nutartige Ausnehmungen am Außenumfang der Stützhülse aufgenommen sind. Die Stützhülse braucht, um ihre mechanische Stabilität insbesondere beim Verpressen der Presshülse sicherstellen zu können, eine bestimmte Wandstärke, diese Wandstärke wird folglich durch die Tiefe der O-Ringnut und die für die Stabilität notwendige Wanddicke der Stützhülse bestimmt.

Im Stand der Technik gibt es ferner diverse Verbindungsvorrichtungen, die aus Messing gefertigt sind. Andere Verbindungsvorrichtungen sind aus mechanisch stabilen Kunststoffen gefertigt. Die mechanisch gefertigten Kunststoffe sind jedoch im Vergleich mit Metall und insbesondere Messing ebenfalls nur relativ gering belastbar. Dagegen ist es einfacher und kostengünstiger, die Verbindungsvorrichtung beispielsweise aus Kunststoff zu gießen oder spritzugießen, als die Bestandteile der Verbindungsvorrichtung in Bezug auf ihre groben Konturen aus flüssigem Metall zu gießen, um anschließend die Feinkonturen zu fräsen oder dgl.

Es ist die Aufgabe gemäß der vorliegenden Erfindung, eine Verbindungsvorrichtung zur Verfügung zu stellen, die mit wenigstens einem der oben genannten Probleme im Stand der Technik fertig zu werden vermag. Insbesondere soll eine Verbindungsvorrichtung geschaffen werden, die kostengünstiger herstellbar ist.

Gemäß der Erfindung wird diese Aufgabe dadurch gelöst, dass wenigstens ein ringartiges Dichtelement auf dem Stützabschnitt vorgesehen wird, welches im Querschnitt wenigstens in etwa polygonförmig, bzw. elliptisch oder trapezförmig ausgebildet ist. Zweckmäßige Ausführungsformen der erfindungsgemäßen Verbindungsvorrichtung werden in den Unteransprüchen definiert.

Durch die Verwendung eines erfindungsgemäßen Dichtelementes ist es möglich, ein Dichtelement mit einer zufrieden stellenden Dichteigenschaft in relativ flacher Bauweise zur Verfügung zu stellen. Durch die flache Bauweise des im Querschnitt etwa trapezförmigen oder elliptischen Dichtelementes, insbesondere ein O-Ring, kann die Nut, die das Dichtelement aufnimmt, auch sehr flach ausgebildet sein. Auf diese Weise kann der lichte Querschnitt der Stützhülse erweitert werden, was zu einem merklich gesteigerten Strömungsquerschnitt innerhalb der erfindungsgemäßen Verbindungsvorrichtung führt. Hierdurch kann zum Einen die hydraulische Leistungsfähigkeit der erfindungsgemäßen Verbindungsvorrichtung erhöht werden und zum Anderen können auch Strömungsgeräusche innerhalb eines Leitungssystems, die im Wesentlichen durch Einschnürungen und Erweiterungen im Strömungsquerschnitt über die verschiedenen Leitungen eines Leitungssystems erzeugt werden, wesentlich verringert werden.

Zudem kann sogar eine bessere Dichtleistung beobachtet werden, da die Dichtfläche, die ein erfindungsgemäß mit trapezförmigem Querschnitt ausgebildetes Dichtelement zur Verfügung stellen kann, bei weitem größer ist, als bei einem O-Ring. Ferner kann diese große Dichtfläche auch ohne übermäßige Verformungen des Dichtelementes bereitgestellt werden. Bei herkömmlichen O-Ringen ist bei einer Verbindung eines O-Ringes mit einer Gegenfläche zunächst nur eine sehr geringe Dichtfläche vorhanden. Diese muss dann durch eine zunehmende Deformation des O-Ringes bereitgestellt werden, was gemäß der Erfindung nicht erforderlich ist.

Ferner ist es in Bezug auf eine Verbindungsvorrichtung gemäß der Erfindung möglich, im Rahmen der Fertigungstoleranzen der Bestandteil der Verbindungsvorrichtung und von anzuschließenden Rohren im unverpressten Zustand der Verbindungsvorrichtung eine in engen Grenzen reproduzierbare Undichtigkeit zur Verfügung zu stellen, so dass, wenn eine erfindungsgemäße Erfindungsvorrichtung unbeabsichtigt unverpresst an der Baustelle hinterlassen worden ist, bei Einleitung von Flüssigkeit oder einem anderen Fluid in ein mit erfindungsgemäßen Verbindungsvorrrichtungen hergestelltes Rohrleitungssystem bereits druckfrei oder unter geringem Druck, mit dem das in dem Leitungssystem befindliche Fluid beaufschlagt wird, zu erkennen, dass die betreffende Verbindung nicht verpresst worden ist. Somit kann die Erfindung insbesondere auch aufgrund des erfindungsgemäß ausgebildeten Dichtelementes eine Warnfunktion zur Verfügung zu stellen, die dem Handwerker optisch zu erkennen geben kann, welche Verbindung noch nicht verschlossen bzw. verpresst worden ist.

Eine vorteilhafte Ausführungsform kann sich ergeben, wenn das Dichtelement angeklebt oder angespritzt ist. Mit bestimmten Materialien, wie etwa Latex, lassen sich Dichtelemente ausbilden, die sogleich in eine fertig gestellte Stützhülse eingebracht werden können, was die Produktionskosten verringern hilft. Ist die Stützhülse aus Metall, lässt sich das Material eines eventuell defekten Dichtelementes auch ohne Weiteres entfernen und durch ein neues Dichtelement ersetzen.

Eine im unverpressten Zustand erwünschte Undichtigkeit der erfindungsgemäßen Verbindungsvorrichtung lässt sich etwa auch dadurch bewerkstelligen, dass der Außenumfang des Dichtelementes im montierten Zustand auf der Stützhülse radial höchstens gleich weit oder etwas weniger weit erstreckt ist, wie der Innenumfang des anzuschließenden Rohres, so dass ein druckloses oder unter geringem Druck stehendes Fluid zwischen dem Dichtelement oder dem aufgeschobenen Rohr hindurchtreten kann.

Vorteilhafterweise wird das Dichtelement in einer umfänglichen Ausnehmung oder Rille der Struktur der Stützhülse angeordnet, wobei die im Querschnitt gesehenen Konturen des Dichtelementes, bevorzugt ein trapezförmiges Dichtelement, in etwa im Querschnitt denen der Nut entsprechen. Diese Ausbildung der Nut unterstützt den im Wesentlichen trapezförmigen O-Ring in seiner Stabilität und sorgt dafür, dass eine gleichmäßige Flächenpressung an den langen Seiten des Querschnitts des Dichtelements zustande gebracht werden kann.

Wie bereits angedeutet, ist die erfindungsgemäße Verbindungsvorrichtung auch insoweit sehr vorteilhaft, als die Wandstärke des Stützhülsenabschnitts aufgrund der trapezförmigen Form des Querschnitts des Dichtelementes und aufgrund dessen die Ausnehmung bzw. Nut zur Aufnahme des Dichtelementes eine geringere Tiefe aufweist, um die Tiefendifferenz zu einer Aufnahme bzw. einer Nut für einen O-Ring herkömmlicher Art verringert ist. Auf diese Weise ist weniger Material für die Herstellung der Verbindungsvorrichtung erforderlich. Zudem sind die Strömungsgeräusche geringer und die hydraulische Leistungsfähigkeit verbessert.

Ein anderer Aspekt gemäß der Erfindung ergibt sich, wenn der Anschlagabschnitt und/oder der Stützhülsenabschnitt aus einem Kunststoffmaterial ausgebildet sind. Es ist möglich, beide Abschnitte aus Kunststoff auszubilden, wobei jedoch aufgrund der höheren mechanischen Stabilität es auch vorteilhaft sein kann, nur die einem großen Druck während des Verpressvorganges ausgesetzte Stützhülse aus einem Metall und insbesondere aus Messing herzustellen, während der Anschlagabschnitt bzw. der Bund, der den Anschlagabschnitt umfasst, aus Kunststoff hergestellt sein kann. Der Kunststoff kann dabei an den Metallabschnitt angeformt sein, beispielsweise angespritzt sein, spritzgegossen sein, oder dgl.

Um die mechanische Stabilität einer derart ausgebildeten erfindungsgemäßen Verbindungsvorrichtung insbesondere im Hinblick auf die Verbindungsstellen zwischen dem Kunststoffmaterial und dem Metall zu verbessern, kann das Metall mit wenigstens einem, bevorzugt mehreren Verankerungsabschnitten ausgebildet sein, die den Halt zwischen Kunststoff und Metall bei der erfindungsgemäßen Verbindungsvorrichtung wesentlich verbessern können.

Vorteilhafterweise ließe sich gemäß der Erfindung beispielsweise eine Stützhülse dadurch herstellen, dass diese etwa aus einem tiefgezogenen zylindrischen Metallstück, einem rohrartigen Metallstück oder dgl. hergestellt wird. Dabei kann die Struktur der Stützhülse für eine Vielzahl von Stützhülsen gleichzeitig in einer Fräse eingebracht werden, ohne dass irgendwelche Umspannvorgänge vorgenommen werden müssen oder die Grobkonturen eines Bundes oder Anschlages vorab durch einen Metallgussvorgang hergestellt werden müssten. Der Bund bzw. Anschlag könnte nachträglich, bevor oder nachdem das Rohrstück mit diversen Stützhülsenabschnitten fertig gestellt ist, aus Kunststoff angeformt werden.

Weitere Vorteile ergeben sich, wenn das wenigstens eine Dichtelement entlang der Stützhülse vollumfänglich derart angeordnet ist, dass es bei bzw. nach der Verpressung mit einem Verpressungswerkzeug Dichtwirkung entfaltet. D.h., das wenigstens eine Dichtelement ist so vorgesehen, dass es bei Verwendung diverser normierter Pressbacken von Presswerkzeugen jeweils ausreichend verpresst wird, um bei den durch Normen vorgegebenen Prüf- und Betriebsdrücken dicht zu sein.

Vorteilhafterweise können auch zwei Dichtelemente der erfindungsgemäßen Art vorgesehen sein, die so angeordnet sein können, dass immer wenigstens eines dieser Dichtelemente hinreichend verpresst wird, wenn die üblichen Pressbacken von Presswerkzeugen herangezogen werden, als da beispielsweise sind, die TH-Pressbacken, die H-Pressbacken und die U-Pressbacken.

Nachfolgend wird die vorliegende Erfindung bzw. werden die vorliegenden Erfindungen anhand der nachfolgenden Beschreibung eienr bevorzugten Ausführungsform unter Bezugnahme auf die beigefügten Figuren näher erläutert, wobei weitere Vorzüge, Merkmale und Zielsetzungen gemäß der Erfindung offenbart werden. In den Darstellungen zeigen:
- Fig. 1: eine Seitenansicht auf einen bevorzugt zylindersymmetrischen Stützhülsenabschnitt einer Verbindungsvorrichtung gemäß der Erfindung;
- Fig. 2: eine Einzelheit X gemäß Fig. 1;
- Fig. 3: eine bevorzugte Ausführungsform eines Dichtelementes in einer querschnittlichen Darstellung; und
- Fig. 4a bis 4c: einen Stützhülsenabschnitt gemäß Fig. 1 in Bezug auf Pressflächen verschiedener Presswerkzeuge.

In den nachfolgenden Figuren sind gleiche oder zumindest funktionsgleiche Bestandteile mit den jeweils gleichen Bezugsziffern versehen. Infolgedessen erübrigt sich eine mehrfache Beschreibung gleicher Bestandteile.

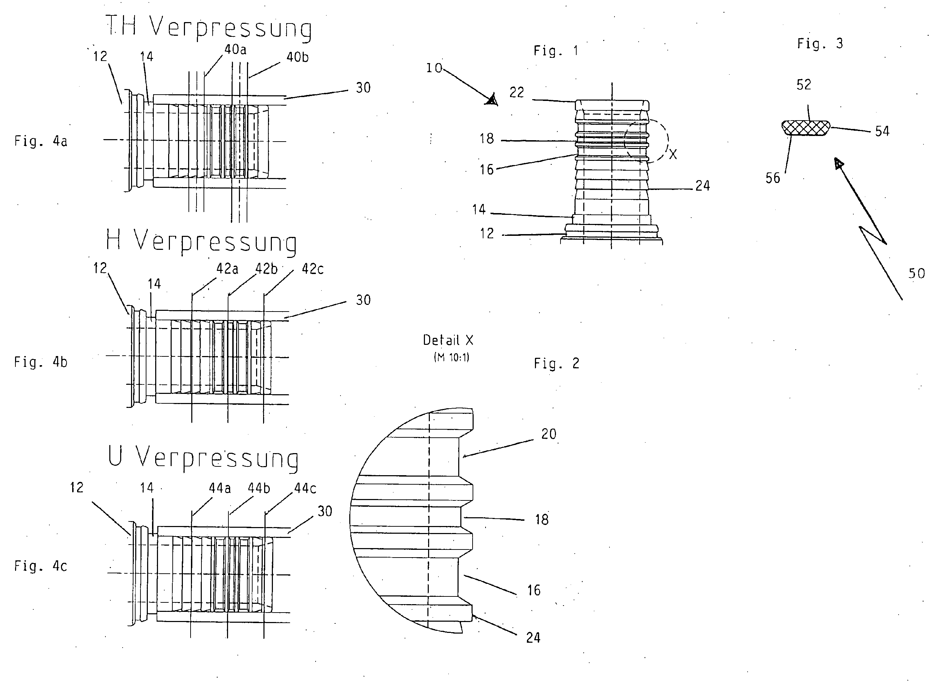

In Fig. 1 ist eine bevorzugte zylindrische Stützhülse 10 dargestellt, um die herum zur Bewerkstelligung der Festlegung eines Rohrendes (nicht dargestellt) eine gleichfalls bevorzugt zylindrische Presshülse bevorzugt aus Messing, Edelstahl oder einem anderen Metall, wie etwa einem nicht rostendem austenistischem Stahl, oder dgl., ausgebildet sein kann.

Die Stützhülse 10 weist ein aufschubseitiges Ende 23 auf, das beispielsweise mit einer abgerundeten oder schrägen Kante ausgebildet sein kann, um das Aufschieben eines festzulegenden Rohres zu erleichtern. An dem in Aufschubrichtung gegenüberliegenden Ende ist ein Bund 12 vorgesehen, an dem ein anderes Verbindungsorgan anschließen kann, etwa eine weitere Stützhülse 10, ein Gewindeanschluss (nicht dargestellt), ein Bajonettanschluss, oder dgl. mehr.

Am Bund 12, der einstückig mit dem Rest der Stützhülse 10 aus Messing hergestellt sein kann, ist ein Anschlag 14 vorgesehen, an den das Rohrende in Aufschubrichtung anschlägt. Dieser Anschlag kann beispielsweise eine Höhe haben, derart, dass ein Verbundrohr, das eine mit jeweils Kunststoff innen- und außenumfänglich beschichtete Metallschicht, etwa Aluminiumschicht, enthält, keinen elektrischen bzw. galvanischen Kontakt zu der erfindungsgemäßen Verbindungsvorrichtung erhält. Andererseits ist es auch möglich, den Bund 12 und bevorzugt auch den Anschlag 14 aus einem Kunststoffmaterial anzuspritzen, bzw. zu gießen, so dass ein galvanischer Kontakt jedenfalls vermieden werden kann.

Festzuhalten ist noch, dass natürlich, insoweit ein ausreichend fester Kunststoff zur Verfügung steht. Auch die Stützhülse insgesamt aus Kunststoff gefertigt werden kann.

Die Stützhülse weist zudem eine oder zwei Nuten zur Aufnahme eines wenigstens im Wesentlichen trapezförmigen oder elliptischen Ringprofils 50 (siehe Fig. 3) auf. Wie in dem Detail X gemäß Fig. 2 zu erkennen ist, sind die Ränder der Nut 16 und der Nut 20, die für die Aufnahme eines O-Ringprofils gemäß Fig. 3 ausgebildet sind, mit schrägen Kanten versehen, so dass sich eine zu dem in etwa trapezförmigen Ring korrespondierende Form im Querschnitt der Nut 16, 20 ergibt. Zwischen den für einen Ring bestimmten Nuten 16, 20 ist eine zusätzliche Nut 18 vorgesehen, die z.B. zur Aufnahme von Rohrmaterial bestimmt sein kann, das beim Verpressen des Rohres verdrängt wird und anderweitig unterzubringen ist.

Die weiteren Profilausbildungen in Form von Zacken 24 bzw. einer Sägezahnstruktur 24 sind dazu gedacht, beim Verpressen der erfindungsgemäßen Verbindungsvorrichtung verdrängtes Kunststoffmaterial des festzulegenden Rohrendes aufzunehmen und in das Rohrmaterial einzugreifen, um es gegenüber Abzugskräften auf der Stützhülse 10 festzuhalten.

In Fig. 3 ist ein bevorzugtes Profil eines Dichtelementes bzw. Ringes 50 erkennbar. Der Ring ist im Wesentlichen trapezförmig ausgebildet und weist zwei Schmalseiten 54 und zwei Breitseiten 52, 56 auf. Die schmälere Breitseite 56 ist dabei in Kontakt zu der Oberfläche der Stützhülse innerhalb der Nut 16 bzw. 20. Die breitere Seite 52 kommt in Kontakt zu dem aufzuschiebenden Rohrende 30 (siehe Fig. 4a bis 4c).

Die Kanten des Ringprofils des Dichtelementes 50 sind abgerundet, können jedoch auch spitzer sein oder vollkommen eckig ausgebildet sein. Auch das Verhältnis der Breitseiten 52, 56 des Trapezes bzw. der Schmalseiten 54 zueinander muss nicht dem dargestellten Verhältnis entsprechen.

In den Fig. 4a bis 4c sind die Lagen von Pressflächen von Presswerkzeugen (nicht dargestellt) in Bezug auf die Stützhülse bei einem Verpressvorgang dargestellt. Ein Rohr 30 ist bis zum Anschlag 14, an den der Bund 12 anschließt, aufgeschoben.

In Fig. 4a ist erkennbar, dass eine Pressfläche 40a so bei der Verpressung zu der Struktur bzw. dem Profil der Stützhülse orientiert ist, dass die Verpressung 40a, die sich durch die entsprechende Pressfläche des Presswerkzeuges ergeben wird, nicht über einem Dichtelement 50 zu liegen kommt, d.h., neben der Nut 16 in Bundrichtung liegt. Die andere Pressfläche respektive Verpressung 40b liegt unmittelbar über der Nut 20, die zur Aufnahme eines Dichtelementes 50 bestimmt ist.

Gemäß Fig. 4b liegen die Pressflächen bzw. die Verpressungen 42a, 42b, 42c bei Verwendung einer H-Pressbacke derart, dass die mittlere Pressfläche bzw. Verpressung 42b zwischen den Dichtelementen 50, über der Nut 18 gemäß Fig. 1 bzw. Fig. 2 zu liegen kommt. Auch auf diese Weise werden hinreichende Dichtflächen zwischen den Dichtelementen 50, die sich in den Nuten 16, 20 befinden, und dem Rohrinnenumfang ausgebildet. Auch für die U-Verpressung gemäß Fig. 4c ergibt sich eine entsprechende Lage der verpressten Bereiche, so dass eine ausreichende Verpressung in den Bereichen der Pressflächen 4a, 44b, 44c einer U-Pressbacke ergeben.

Bei der vorliegenden Verbindungsvorrichtung sind zwei Dichtelemente vorgesehen, und die Verpressbereiche an den Verbindungsvorrichtung nach der Verpressung relativ zu den Dichtelementen anzuordnen, dass eine Dichtwirkung entfaltet wird.

## Patentansprüche

1. Verbindungsvorrichtung für den Anschluss eines Kunststoff aufweisenden Rohres (30), mit den folgenden Merkmalen:
- einem Stützhülsenabschnitt (10), auf den das Rohr (30) aufschiebbar ist, und der bevorzugt eine umfängliche Struktur (16, 18, 20, 22, 24) aufweist;
- einem Anschlagabschnitt (14, 12), der dem Stützhülsenabschnitt in Aufschubrichtung des Rohres nachgelagert ist, und an den das Rohr stirnseititg anschlägt;
- sowie insbesondere eine vorzugsweise zylindrische Presshülse, die die Stützhülse (10) umgibt und einen Ringraum zur Aufnahme des Rohres zwischen sich und der Stützhülse bereitzustellen vermag;
**dadurch gekennzeichnet, dass** wenigstens ein ringartiges Dichtelement (50) auf dem Stützabschnitt (10) vorgesehen ist, das im Querschnitt wenigstens in etwa trapezförmig, rechteckig oder polygonförmig ausgebildet ist..

2. Verbindungsvorrichtung nach Anspruch 1, **dadurch gekennzeichnet, dass** das Dichtelement (50) geklebt oder angespritzt ist.

3. Verbindungsvorrichtung nach einem der Ansprüche 1 oder 2, **dadurch gekennzeichnet, dass** der Außenumfang des Dichtelements (50) radial höchstens gleich weit oder etwas weniger weit erstreckt ist, wie der Innenumfang des anzuschließenden Rohres (30), so dass ein druckloses oder unter geringem Druck stehendes Fluid zwischen dem Dichtelement und dem aufgeschobenen Rohr hindurchzutreten vermag.

4. Verbindungsvorrichtung nach einem der Ansprüche 1 bis 3, **dadurch gekennzeichnet, dass** das Dichtelement in einer umfänglichen Ausnehmung oder Rille (16, 20) bzw. Nut der Struktur vorgesehen ist.

5. Verbindungsvorrichtung nach Anspruch 4, **dadurch gekennzeichnet, dass** die Wandstärke des Stützhülsenabschnitts aufgrund der trapezartigen Form des Querschnitts des Dichtelements, aufgrund dessen die Ausnehmung bzw. Nut (16, 20) eine geringere Tiefe aufweist, um eine entsprechende Tiefendifferenz verringert bzw. dünner ist.

6. Verbindungsvorrichtung insbesondere nach dem Oberbegriff des Anspruchs 1 sowie nach einem der Ansprüche 1 bis 5, wobei der Anschlagabschnitt (12, 14) und/oder der Stützhülsenabschnitt (10) mit bzw. aus einem Kunststoffmaterial ausgebildet ist.

7. Verbindungsvorrichtung nach Anspruch 6, **dadurch gekennzeichnet, dass** der jeweils eine Abschnitt aus einem Metall, insbesondere Messing, hergestellt ist und der jeweils andere Abschnitt aus Kunststoff ausgebildet ist und insbesondere an dem Materialabschnitt angeformt ist.

8. Verbindungsvorrichtung nach einem der Ansprüche 6 oder 7, **dadurch gekennzeichnet, dass** der im Wesentlichen aus Metall bestehende Abschnitt wenigstens einen Verankerungsabschnitt umfasst, der in das Kunststoffmaterial des im Wesentlichen aus Kunststoffmaterial bestehenden Abschnittes aufgenommen ist.

9. Verbindungsvorrichtung nach einem der Ansprüche 1 bis 8, **dadurch gekennzeichnet, dass** das wenigstens eine Dichtelement ein O-Ring ist.

10. Verbindungsvorrichtung nach einem der Ansprüche 1 bis 9, **dadurch gekennzeichnet, dass** das wenigstens eine Dichtelement (50) entlang der Stützhülse vollumfänglich derart angeordnet ist, dass es bei bzw. nach der Verpressung mit einem Verpresswerkzeug Dichtwirkung entfaltet.
